# EUROPEAN PATENT SPECIFICATION

(11) **EP 4 459 394 B1**
(45) Date of publication and mention of the grant of the patent: **09.04.2025**
(21) Application number: 23171917.0
(22) Date of filing: 05.05.2023
(51) Int. Cl.: G05B 19/042

(54) **SLAVE MODULE AND METHOD FOR STARTING THE ITERATIVE REGISTRATION OF SLAVE MODULES OF A MODULAR CONTROLLER SYSTEM**
SLAVE-MODUL UND VERFAHREN ZUM STARTEN DER ITERATIVEN REGISTRIERUNG VON SLAVE-MODULEN EINES MODULAREN STEUERUNGSSYSTEMS
MODULE ESCLAVE ET PROCÉDÉ DE DÉMARRAGE D'ENREGISTREMENT ITÉRATIF DE MODULES ESCLAVES D'UN SYSTÈME DE CONTRÔLEUR MODULAIRE

(43) Date of publication of application: 06.11.2024
(73) Proprietor: Danfoss A/S, 6430 Nordborg (DK)
(72) Inventor: Dametto, Giulio, 6430 Nordborg (DK); Boschiero, Denis, 6430 Nordborg (DK); De Nardo, Luca, 6430 Nordborg (DK)
(74) Representative: Keil & Schaafhausen Patentanwälte PartGmbB

(56) References cited:
- EP-A1- 1 284 556
- EP-A1- 2 007 077
- US-A1- 2016 224 489
- US-A1- 2016 299 484

## Description

The present invention relates to a slave module for a modular controller system (e.g. for automation control) employing an industrial network, e.g. a fieldbus, for communication within the controller system, wherein the modular controller system comprising a master module. The invention further relates to a controller system and to a method for starting the iterative registration of slave modules of a modular controller system.

A modular controller system for automation often includes a master module and several slave modules. In the present disclosure, the term "module" may be used as a general term encompassing both the master module and the slave modules. The modules are typically connected by bus cables of the network and communicate via the network in operation. This allows the modules to work together.

For proper target-oriented communication in the network, the slave modules must have individual network "addresses". Each slave module must be individually registered within the network with an individual network identifier (network ID).

In a typical fieldbus network, the modules are connected to the network in parallel. It is not possible to determine a physical or logic position of the individual slave module automatically. Therefore, the slave modules are normally configured upfront in a manual way. This is done by manually assigning, respectively to each of the slave modules, a unique network ID. The network ID identifies the individual slave module and enables it to participate in the network communication. Furthermore, fieldbus terminations must be manually placed or configured at the physical beginning and the physical end of the fieldbus. One end of the fieldbus is typically terminated by the master module. The other end is typically terminated by the slave module that is positioned the furthest away from the master module.

The manual configuration of the network requires time and hence produces costs. Apart from that, it is prone to human errors.

Another approach used is the so-called "daisy chaining" of the modules. In a daisy chain, the modules are connected in series by the network, in more detail in a sequence with point-to-point physical network connections between consecutive modules. With this, the physical/logic position of the modules in the daisy chain can be determined by the controller system itself. However, compared to a typical fieldbus, such a daisy chain network is in general significantly less efficient with regard to costs and/or performance.

EP 2 007 077 A1 discloses a method for detecting the position of slave devices in a series connection starting from a master device.

Further, an enumeration method for master/slaver enumeration technique is known from US 2016/0224489 A1.

The problem underlying the invention is to facilitate the commissioning of a modular controller system using a cost-efficient and performant network.

This problem is solved by a slave module according to claim 1. Preferred embodiments are described in the dependent claims.

The slave module is for a modular controller system employing an industrial network for communication within the controller system, the modular controller system comprising a master module.

The slave module comprises a processing unit and a network adapter for the network, wherein the network adapter is operatively coupled to the processing unit.

The slave module includes a separate status input connector coupled to the processing unit and a separate status output connector coupled to the processing unit. In other words, the status input connector and the status output connector are provided in addition to the network adapter.

The processing unit is capable of sensing a voltage applied at the status input connector with respect to an electric reference potential and to apply a trigger voltage at the status output connector with respect to the reference potential.

The slave module is configured to, in an enumeration state,
- send, upon the processor unit sensing that the trigger voltage is applied at the status input connector, a presentation message to the master module via its network adapter and the network,
- apply, upon receiving a registration response from the master module at the network adapter, the trigger voltage at the status output connector by means of the processing unit.

The slave module facilitates the commissioning of the modular controller system. The status output connector is connectable to the status input connector of a congeneric slave module. Vice versa, the status input connector is connectable to the status output connector of another congeneric slave module. The registration cycle for the individual slave module automatically starts by sensing the trigger voltage at its status input connector. The registration response from the master modules shows that the master module acknowledged and registered the slave modules as new member of the network. The automatic application of the trigger voltage at the status output connector can be used to trigger a congeneric previous slave module to automatically start its individual registration cycle with the master module.

The term "congeneric" may mean that the respective slave modules are in accordance with any embodiment described herein. Especially, the congeneric slave module may be of the structure and/or exhibit the functionalities as defined in any one of the claims. In particular, a congeneric slave module may be any slave module that exhibits the same structure and/or exhibits the same functionalities as the (present) slave module. Naturally, the term "congeneric" includes the case that the slave modules are identical.

The term "module" may encompass e.g. electronic controller modules, power supply modules, input-output modules (I/O modules), and alike.

The slave module may comprise at least one input and/or output connector (I/O connector). Especially, the slave module may comprise several (additional) I/O connectors.

In one embodiment, the slave module is connectable - e.g. by the I/O connector(s) - to at least one sensor, e.g. to a temperature sensor, a fluid flow sensor, a pressure sensor, a humidity sensor, and/or a dew point sensor.

Additionally or alternatively, the slave module may be configured to provide control signals for controlling operational components (e.g. actuators, valves, fans, compressors, heat exchangers, fluid flow mixers, and the like), for example based on information received from the sensor(s) and/or instructions received from the network (e.g. from the master module). The control signals may be outputted by the I/O connector(s).

The master module of the controller systems may be further configured to emit an initialization broadcast via the network.

In one embodiment, the slave module is configured to, in an incipient state,
- switch, upon receiving the initialization broadcast at the network adapter, from the incipient state to the enumeration state.

This ensures that the slave module does not apply the trigger voltage at its status output connector before it has received the initialization broadcast.

The slave module may be configured to be in the incipient state directly upon powering up. For example, the incipient state may be the first functional state after power supply to the slave module has started.

In one embodiment, the slave module is configured to apply, in the incipient state and the enumeration state, an idle voltage, which is different from the trigger voltage, at its status output connector with respect to the reference potential until it applies the trigger voltage at the status output connector in the enumeration state by means of the processing unit.

If the status output connector is electrically connected to the status input connector of the master module, the master module can determine that at least one slave module is present by sensing the idle voltage before it has emitted the initialization broadcast. If the status output connector is electrically connected to the status input connector of an (e.g. congeneric) previous slave module, the previous slave module can sense the idle voltage in the incipient state (e.g. by its processing unit) and conclude that it is not a furthest ("last") slave module. In the enumeration state, the previous slave module detects, by sensing the idle voltage, that it is not yet the turn for sending its own presentation message.

The slave module can include an activatable network terminator for terminating the network at the slave module (when the network terminator is activated),
wherein the slave module is configured to, in the incipient state,
- automatically activate the network terminator unless the processing unit senses that the idle voltage is applied at the status input connector.

Hence, the network is automatically terminated at the furthest slave module but not terminated at any other of the slave modules.

The voltage at the status input connector (e.g. corresponding to the idle voltage or the second voltage depending on the situation), may be a difference between an electric potential at the status input connector and the reference potential. Additionally or alternatively, the voltage at the status output connector, (e.g. corresponding to the trigger voltage or the second voltage depending on the situation) may be a difference between an electric potential at the status output connector and the reference potential.

According to another aspect, an absolute value of the idle voltage is 0,5 V at the maximum. This allows to set the idle voltage in a simple and cost-efficient manner, e.g. by a pull-down discharger, which is connected to the reference potential.

The processing unit may include (especially consist of) a microcontroller unit (MCU). The processing unit/MCU may comprise at least one processer.

In one embodiment, the slave module comprises a trigger output of the processing unit, which is connected to the status output connector for applying the trigger voltage.

Additionally or alternatively, the slave module may comprise an electrical reference potential applicator, e.g. a pull-down discharger, which is electrically connected to the status output connector for applying the reference potential to the output connector when the trigger voltage is not applied by the processing unit. This is a simple and cost-efficient implementation for applying the idle voltage. The electrical potential applicator may be connected to the status output connector in parallel to the trigger output.

According to a further aspect, the slave module may comprise an electrical second potential applicator, e.g. a pull-up supply, which is electrically connected with the status input connector for applying a second voltage with respect to the reference potential to the status input connector. This is useful to set the voltage at the status input connector to a voltage different from the idle voltage when the status input connector is unconnected. This allows detecting that the slave module is the furthest slave module by sensing, in the incipient state, the second voltage at the status input connector.

The reference potential applicator may be is stronger than the second potential applicator. In other words, if the status output connector of the slave module is electrically connected to the status input connector of a previous slave module or the master module, the voltage at said status input connector is drawn to the idle voltage (at least as the slave module does not apply the trigger voltage).

Additionally or alternatively, the trigger condition output is stronger than the reference potential applicator (and hence also than the second potential applicator). This allows to selectively apply the trigger voltage.

The second voltage may be at least substantially the same as the trigger voltage and/or as a supply voltage. In particular, it may be identical to the trigger voltage.

The slave module can be configured to automatically enter the incipient state upon powering up. The eases the automatic registration of the slave modules with the master modules upon powering up.

The network can be a fieldbus, for example a CAN bus. In one embodiment, the network adapter is a corresponding fieldbus adapter. The CAN bus is a cost-efficient, reliable, and sufficiently fast network. Furthermore, it offers a multimaster feature.

In one embodiment, the slave module comprises a mounting fixture for mounting the slave module on a mounting rail. The rail may be a standardized equipment rail, e.g. a rail as defined in DIN EN 60715. The slave module may be configured to use an electric potential of the rail as the reference potential.

The electric reference potential may be an electric ground potential. Several slave modules and/or the master module may be configured to a common electric ground potential, e.g. the electric potential of the same rail.

The trigger voltage may be pre-determined.

A pre-determined absolute value of the trigger voltage may be at least 1 V, for example at least 1,2 V. Additionally or alternatively, the absolute value of the trigger voltage may be 15 V at the maximum, for example 5 V at the maximum. The trigger voltage may be positive or negative.

An acceptable variation of the trigger voltage around the pre-determined absolute value may be 20 % of the pre-determined absolute value, for example 8 %.

In one embodiment, the slave module is configured to, in the enumeration state,
- apply, upon receiving a registration response from the master module at the network adapter, a trigger signal at the status output connector by means of the processing unit, wherein the trigger signal includes that the trigger voltage is repeatedly applied to the status output connector, e.g. by applying the trigger voltage in a periodic manner, for example in a pulsed manner.

The problem mentioned above is further solved by a controller system for employing an industrial network for communication within the controller system, wherein the controller system comprises a master module and at least one, for example at least two slave modules according to the present invention.

The modifications and advantages described with regard to the slave module apply to the controller system accordingly, and vice versa.

In one embodiment, the master module includes
a processing unit;
a network adapter for the network, wherein the network adapter is operatively coupled to the processing unit of the master module; and
a separate status input connector, wherein the processing unit of the master module is capable of sensing a voltage applied at the status input connector of the master module with respect to the electric reference potential.

The master module and the slave module(s) may be connected via the network.

Additionally, the status input connector of the master module can be electrically connected to the status output connector of a first slave module of the slave modules.

The (at least two) slave modules can be additionally connected in series by electrically connecting, respectively for subsequent slave modules, the status input connector of the respective slave module to the status output connector of a following slave module.

The master module may comprise a mounting fixture for mounting the slave module on the mounting rail. The master module may be configured to use the electric potential of the rail as the reference potential.

The master module may comprise an external network adapter for connection with an external network, which is different from the industrial network employed for communication within the controller system. The external network may be an ethernet network or another fieldbus. The external network adapter may include a cable terminal, e.g. an external ethernet connector and/or an external bus connector, or a hardware port, e.g. an RJ-45 port.

The modular controller system may be an automation controller system, e.g. for controlling climate systems, parts thereof (including air condition systems and/or refrigeration systems), and/or industrial installations, for example production facilities.

The controller system can be configured to control components like actuators, compressors, valves, fans, robots, and alike, e.g. within an automated system. The modules may be configured accordingly.

The system may include at least one mounting rail for mounting the master module and several of the slave modules (for example, all of them) together on the mounting rail. In operation, the master module and said several slave modules may be mounted side by side on the mounting rail.

The master module may comprise a power supply unit, e.g. an electric transformation and/or rectifier, for connection with an external power source.

According to one aspect, the master module comprises an electric power output for supplying electric power to at least the first slave module. Accordingly, the first slave module does not need a separate power supply unit.

Each slave module may include an electric power input for connection with the electric power output of the master module or the previous slave module. Each slave module can include a corresponding electric power output. Hence, electric power supplied by the master module can be forwarded through several slave modules in series.

The problem mentioned above is further solved by a method according to claim 12.

The modifications and advantages described with regard to the slave module and/or the controller system apply to the method accordingly, and vice versa. The controller system and the slave module may be configured for performing the method. Vice versa, the method may employ the disclosed slave module, master module, and/or controller system.

It is a method for starting the iterative registration of slave modules of a modular controller system (the controller system having a master module and the controller system employing an industrial network for communication within the controller system) with the registration of a furthest slave module of the slave modules, wherein each of the slave modules and the master module respectively comprise a processing unit and a network adapter for the network coupled to the processing unit. Each slave module may be provided, in addition to its network adapter, with a status input connector coupled to the processor unit and a status output connector coupled to the processor unit. The slave modules may be connected in series in that, respectively for subsequent slave modules, the status input connector of the slave module is electrically connected to the status output connector of the following slave module.

The method includes:
- automatically determining the furthest slave module of the slave modules by the furthest slave module detecting that its status input connector is not connected to the status output connector of any other of the slave modules;
- emitting an initialization broadcast from the master module via the network for switching the slave modules to an enumeration state;
- sending a presentation message from the furthest slave module to the master module via the network;
- sending with the master module, upon receiving the presentation message from the furthest slave module, a registration response for the furthest slave module via the network;
- applying, upon receiving the registration response for the furthest slave module by the latter, a trigger voltage at the status output connector of the furthest slave module with respect to an electric reference potential by means of the processing unit of the furthest slave module.

The method facilitates the commissioning of the modular controller system. It exhibits automatic determination of the furthest slave module and starting the individual registration of the slave modules with the furthest slave module. Furthermore, it allows for automatic triggering of the second-furthest slave module in the series of consecutively arrange slave modules.

The method may include at least one of, several of, or all of the following steps:
- connecting the master module and the slave modules via the network;
- providing, respectively at each slave module in addition to its network adapter, the status input connector coupled to the processor unit and the status output connector coupled to the processor unit; and
- additionally connecting the slave modules in series by electrically connecting, respectively for subsequent slave modules, the status input connector of the slave module to the status output connector of the following slave module.

According to one aspect, each of the slave modules may be in accordance with any of the embodiments described. The controller system may be in accordance with any of the embodiments described.

The slave modules may be congeneric.

According to one aspect, the method may include iteratively repeating in the enumeration state, respectively for each of the remaining slave module(s):
- sensing, by means of the processing unit of the slave module, that the electric trigger voltage is applied at the status input connector of the slave module by the following slave module;
- sending a presentation message from the slave module to the master module via the network;
- sending with the master module, upon receiving the presentation message from the slave module, a registration response for the slave module via the network;
- applying, upon receiving the registration response for the slave module by the latter, the trigger voltage at the status output connector of the slave module by means of the processing unit of the slave module.

Hence, the individual slave modules are included iteratively, cycle by cycle, starting with the furthest slave module and ending with the first slave module next to the master module.

The method may include that the furthest slave module independently automatically activates, upon detecting that its status input connector is not connected to the status output connector of any other of the slave modules, a network terminator thereof for physical termination the network at the furthest slave module.

According to another aspect, the method can further include:
- electrically connecting the status output connector of a first slave module of the slave modules to a status input connector of the master module; and
- determining, by the master module (for example by its processing unit), the end of the iterative registration of the slave modules upon sensing that the trigger voltage is applied at the status input connector of the master module.

Additional features, advantages and possible applications of the invention result from the following description of exemplary embodiments and the drawings. All the features described and/or illustrated graphically here form the subject matter of the invention, either alone or in any desired combination, regardless of how they are combined in the claims or in their references back to preceding claims.

Preferred embodiments of the invention will now be described with reference to the drawings, in which:
- Fig. 1: schematically shows an embodiment of a modular controller system with a master module and several slave modules according to the present invention, wherein the master module and the slave modules are connected via an industrial network and are additionally connected in series by a trigger cascade chain;
- Fig. 2: schematically shows an embodiment of a slave module that can form part of the controller system of Fig. 1 in more detail;
- Fig. 3: shows initial steps of a method for an iterative registration of the slave modules of the modular controller system in Fig. 1, wherein the initial steps include the registration of the furthest slave module with the master module for network communication;
- Fig. 4: shows further steps of the method, wherein the further steps result in the registration of the other slave modules with the master module for network communication;
- Fig. 5: is a different presentation of some steps of the method; and
- Fig. 6: schematically shows an embodiment of a master module that can form part of the controller system of Fig. 1 in more detail.

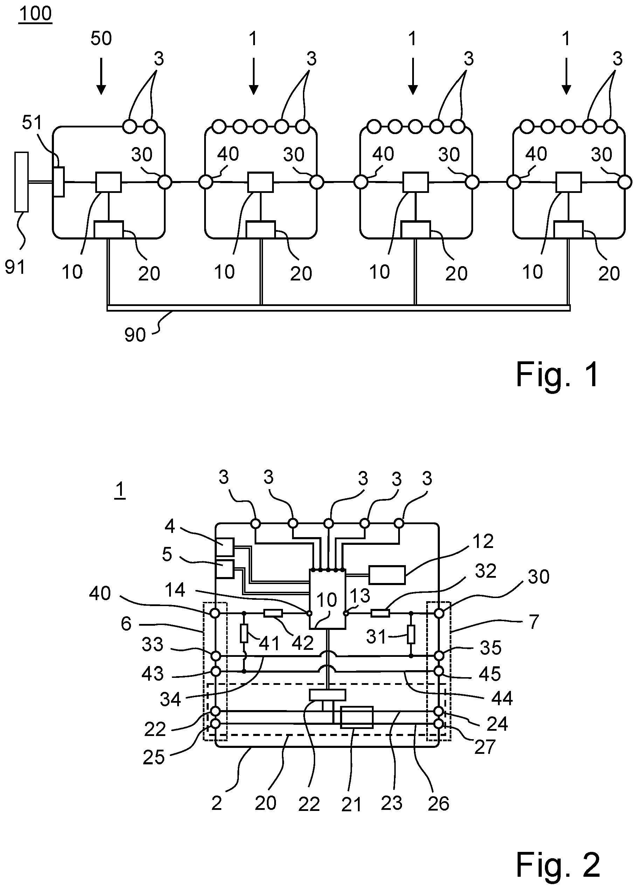

Fig. 1 shows a modular controller system 100 including a master module 50 and several slave modules 1.

All modules 1, 50 are connected via an industrial network 90. The industrial network 90 can be a fieldbus, for example a Controller Area Network (CAN) bus. The slave module 50 and each of the slave modules 1 comprise a network adapter 20, respectively. Each network adapter 20 is configured for connection with the network 90. In the embodiments shown, the network 90 is a wire-based network. In other embodiments, the network 90 may be a wireless network or at least partly wireless.

If the slave modules 1 are registered with the master module 50 for network communication, data can be transferred between the master module 50 and the slave modules 1 via the network 90. For example, the master module 50 may be configured to send instructions to the individual slave modules 1 via the network 90. The slave modules 1 may be configured to send confirmations and/or measurement data to the master module 50 via the network 90. The slave modules 1 and the master module 50 are coupled to the network 90 in parallel, at least functionally. In this specific context, "functionally" may mean "in terms of network topology".

In order to allow data transfer between the modules 1, 50 in an individual, target-oriented manner 1, each of the slave modules 1 must be individually registered within the network 90. The registration is performed by the master module 50. The master module then organizes the data transfer within the controller system 100 via the network 90. The registration of the slave modules 1 for the network 90 may be automatically performed upon powering up of the controller system 100 as described below.

Fig. 2 shows an embodiment of a slave module 1 that can be used for the controller system 100 in Fig. 1. The slave module 1 comprises a processing unit 10. The processing unit 10 includes at least one microprocessor. For example, the processing unit 10 is a microcontroller unit (MCU).

In this embodiment, the slave module 1 comprises a plurality of input/output (I/O) connectors 3. The I/O connectors 3 can be connected to the processing unit 10 as shown in Fig. 2. Some or all of the I/O connectors 3 can include or consist of cable terminals. The I/O connectors 3 are usable to connect further automation hardware to the slave module 1 and hence to the controller system 100. Such further automation hardware may include sensors, e.g. to temperature sensors, fluid flow sensors, pressure sensors, humidity sensors, and/or a dew point sensors. Additionally or alternatively, the further automation hardware may include automation hardware to be operated by the controller system 100, e.g. actuators, valves, fans, compressors, heat exchangers, fluid flow mixers, and/or the like.

The slave module 1 may further include a memory 12 coupled to the processing unit 10. The memory 12 may store operation instructions, algorithms, and/or the like. The slave module 1 can be configured to record operation data, e.g. sensor readings, in the memory 12 during operation.

Optionally, the slave module 1 has a user output 4. The user output 4 can be connected to and controlled by the processing unit 10. The user output 4 can include, for example, a display and/or a speaker. The slave module 1 is configured to provide information to a user via the user output 4, e.g. alerts, information about operational states, and/or sensor readings.

The slave module 1 can include a user input 5, e.g. several buttons and/or a keyboard. The user input 5 can be connected to the processing unit 10. The slave module 1 can be adapted such that the user can input instructions for the operation by the user input 5. The user output 4 and the user input 5 can be combined, e.g. in the form of a touchscreen.

The slave module 1 may have a housing 2.

As noted above, all the modules 1, 50 are connected via the network 90. In addition, the exemplary slave module 1 is adapted for the daisy chaining with congeneric slave modules 1. The congeneric slave modules 1 may have a common connection layout as described herein. In this regard, the connection layout may mean the structure and/or functionalities according to any embodiment described herein. Especially, the connection layout may mean the structure and/or functionalities of the slave module(s) 1 as defined according to any one of the claims. Apart from that, at least some of the slave modules 1 may differ from each other. For example, the individual slave module 1 can be an I/O slave module, a power supply slave module, and/or a stepper controller slave module.

The daisy chain may start directly with the master module 50 as shown in Fig. 1. In this case, the master-side end of the daisy chain is constituted by the master module 50. Alternatively, the daisy chain may start with a first slave module 1 (the most left slave module 1 in Fig. 1). In this case, a master-side end of the daisy chain is constituted by first slave module 1 next to the master module 50.

All slave modules 1 may be connected in series by the daisy chain. A "furthest" slave module 1 (or the "last" slave module 1) is the one of the slave modules 1 that is the furthest away from the master module 50 along the daisy chain. In Fig. 1, the furthest slave module 1 is the rightmost slave module 1. The furthest slave module 1 terminates the daisy chain and also the network 90. The end of the daisy chain at the furthest slave module 1 might be referred to as "free end".

The daisy chain is especially configured for and used for an iterative registration of slave modules 1 in the network 90 with the master module 50 as described in more detail below. In a nutshell, some core aspects of the iterative registration are to automatically determine which is the furthest slave module 1 and to start a cascadic registration process at the furthest slave module 1. Firstly, the furthest slave module 1 is registered in a first registration cycle. After that, the furthest slave module 1 triggers, via the daisy chain, the second-furthest (second-last) slave module 1 for registration of the latter in a second registration cycle and so on.

In Fig. 1, the second-furthest slave module 1 is the second one from the right. In this context, the furthest slave module 1 is the "following" slave module 1 when the second-furthest slave module 1 is considered the "present" slave module. Vice versa, the second-furthest slave module 1 constitutes the "previous" slave module 1 with respect to the furthest slave module 1 when the latter is considered the present slave module 1.

In more general, the following slave module 1 of an arbitrary chosen present slave module 1 is the adjacent slave module 1 that is further away from the master module 50 along the daisy chain. Correspondingly, the previous slave module 1 of an arbitrary chosen present slave module within the daisy chain is the adjacent slave module 1 that is closer to the master module 50 along the daisy chain.

The exemplary slave module 1 may have master-side connector means 6 and/or free-end-side connector means 7.

The master-side connector means 6 and the free-end-side connector means 7 can be configured to form part of a system for electrically connecting two controller system modules as described in European patent application EP 22200612.4. The corresponding disclosures of EP 22200612.4 are incorporated by refence.

Similarly, the master module 50 may comprise a corresponding free-end-side connector means 7 (not shown). The master-side connector means 6 of the first slave module 1 can be connected to the free-end-side connector means 7 of the master module 50. The controller system 100 may comprise connectors for connecting the master-side connectors means 6 to the free-end-side connector means 7 of the respective previous module 1, 50, e.g. connectors as described in EP 222000612.4 for that purpose.

The network adapter 20 of the slave module 1 is coupled to the processing unit 10 of the slave module 1. The network adapter 20 is configured for communication with the network 90. It may comprise one or more network connectors 22, 24, 25, 27 and a network transceiver 22.

In Fig. 2, the network adapter 20 is able to forward the fieldbus (e.g. the CAN bus) employed as the network 90 through the slave module 1. For this purpose, the network adapter 20 comprises an internal network bridge 23, 26. In more detail the network can be forwarded between the master-side network connectors 22, 25 and the free-end-side network connectors 24, 27. The network transceiver 22 is connected to the internal network bridge 23, 26 in parallel. Accordingly, in functional terms and especially in terms of network topology, the modules 1, 50 in Fig. 1 are connected to the network 90 (i.e. the CAN bus) in parallel as shown in Fig. 1. Further, the network transceiver 22 is connected with the processing unit 10. In a modification, the slave module 1 does not include the internal network bridge 23, 26. In this case, the network adapter 20 (and hence the slave module 1) is connected to the network 90 in parallel not only in terms of network topology.

Rather, the network adapters 20 (and hence the slave modules 1) are connected to the network 90 completely in parallel, i.e. also from an external hardware point of view. Each slave module 1 may be independently connected to a common network structure of the network 90. For example, the network 90 may include a network cable means (e.g. a long fieldbus cable such as a long CAN bus cable) with individual connectors for each of the slave modules 1, wherein the network adapters 20 are individually connected to the corresponding connector of the network cable means. Similarly, if the network 90 is a wireless network, there may be no need for the internal network bridge 23, 26.

The slave module 1, in more details its network adapter 90, comprises an activatable network terminator 21. If it is activated, the network terminator 21 terminates the network 90, to which the slave module 1 is connected, at the slave module 1. In Fig. 2, the network 90 may be connected to the master-side network connectors 22, 25 shown in Fig. 2 of the furthermost slave module 1. The network terminator 21 of the furthermost slave module 1 can be activated for terminating the network 90. The network terminator 21 may include, for example, a short circuit between network conductor 23 and network conductor 26, wherein the short circuit may include an electric resistor and a switch for enabling/disabling the short circuit.

Apart from that, the slave module 1 shown in Fig. 1 has an optional reference potential bridge and an optional supply voltage bridge.

The reference potential bridge comprises a refence potential input connector 43, an internal reference potential bypass 44, and a reference potential output connector 45.

The reference potential input connector 43 may form part of the master-side connector means 6. The refence potential input connector 43 may include a metal pin or a pin socket for receiving a metal pin. It can be connected to the reference potential output connector 45 of the previous slave module 1 or of the master module 50 (if the present slave module 1 is the first slave module 1 along the daisy chain, i.e. directly following the master module 50).

The reference potential output connector 45 may form part of the free-end-side connector means 7. The refence potential output connector 45 may include a metal pin or a pin socket for receiving a metal pin. It can be connected to the reference potential input connector 43 of the following slave module 1.

A potential applied at the reference potential input connector 43 may be used as an (electric) reference potential. Additionally or alternatively, the slave module 1 may comprise a reference potential input connector (not shown) for using an electric potential of a mounting rail, on which the slave module 1 is mounted, as the (electric) reference potential.

The supply voltage bridge comprises a supply voltage input connector 33, an internal supply voltage bypass 34, and a supply voltage output connector 45.

The supply voltage input connector 33 may form part of the master-side connector means 6. The supply voltage input connector 33 may include a metal pin or a pin socket for receiving a metal pin. It can be connected to the supply voltage output connector 35 of the previous slave module 1 or of the master module 50 (if the present slave module 1 is the first slave module 1).

The supply voltage output connector 35 may form part of the free-end-side connector means 7. The supply voltage output connector 35 may include a metal pin or a pin socket for receiving a metal pin. It can be connected to the supply voltage input connector 33 of the following slave module 1.

The supply voltage input connector 33 may be used to supply a supply voltage with respect to the electric reference potential to the slave module 1. An absolute value of the supply voltage can be in the range from 5 V to 30 V, for example from 10 V to 20 V. In one embodiment, the supply voltage is 15 V. The supply voltage may be a DC voltage, e.g. +15 V DC.

The slave module 1 comprises a separate status output connector 40. In this context, "separate" may mean that status input connector 40 is a hardware element that is provided in addition to the network adapter 20. The status output connector 40 may form part of the master-side connector means 6. The status output connector 40 may include a metal pin or a pin socket for receiving a metal pin. It can be connected to the status input connector 30 of the previous slave module 1.

The status output connector 40 is connected to the processing unit 10. In more detail, the status output connector 40 may be connected to a trigger output 14 of the processing unit 10. The processing unit 10 is able to apply a trigger voltage U_{T} at the status output connector 40 (and hence at the status input 30 of the previous slave module 1 or the master module 50 connected thereto) with respect to the reference potential. The trigger voltage U_{T} may correspond to the supply voltage or to a predetermined percentage thereof. The trigger voltage U_{T} may be a DC voltage.

An electric reference potential applicator may be connected to the status output connector 40 in parallel to the processing unit 10. The reference potential applicator can include (especially be) a pull-down discharger. In Fig. 2, the pull-down discharger includes an electric connection to the reference potential with a pull-down resistor 41. In more detail, the pull-down discharger connects the status output connector 40 with the electric reference potential input 43 via the pull-down resistor 41 and the reference potential bypass 44.

An ohmic trigger output resistor 42 may be arranged in series between the processing unit 10, in particular the actual trigger output 14, on the one hand and the status output connector 40 and the pull-down resistor 41 on the other hand (see Fig 2). As the characteristic of the trigger output resistor 42 with regard to the trigger voltage output is predetermined and known, it can be considered to form part of the trigger output 14.

Apart from that, the slave module 1 comprises a separate status input connector 30. The status input connector 30 may form part of the free-end-side connector means 7. The status input connector 30 may include a metal pin or a pin socket for receiving a metal pin. It can be connected to the status output 40 of the following slave module 1.

The status input connector 30 is connected to the processing unit 10. In more detail, the status input connector 30 may be connected to a sensing input 13 of the processing unit 10. The processing unit 10 is adapted to sense a voltage applied at the status input connector 30 with respect to the reference potential. The processing unit 10 can sense the voltage applied to the status input port 30 autonomously. It may at least distinguish whether a trigger voltage U_{T} or an idle voltage U₀ is applied at the status input connector 30. The idle voltage U₀ is different from the trigger voltage U_{T}, for example by at least 1,0 V, e.g. by at least 1,5 V.

An electric second potential applicator may be connected to the status input connector 30 in parallel to the processing unit 10. The second potential applicator can include (especially be) a pull-up supply. In Fig. 2, the pull-up supply includes an electric connection to the supply voltage with a pull-up resistor 31. In more detail, the pull-up supply connects the status input connector 30 with the electric supply voltage input 33 via the pull-up resistor 31 and the supply voltage bypass 34.

The status input connector of the furthest slave module 1 in Fig. 1 is unconnected. It is not connected to the status output connector 40 of any other slave module 1. The second potential applicator applies a second voltage with respect to the electric reference potential at the status input connector 30. As the status input connector 30 is unconnected, no significant current flows through the pull-up resistor 31. Hence, there no significant voltage drop across the pull-up resistor 31 although an ohmic resistance of the pull-up resistor 31 is high. Summed up, when the status input connector 30 is unconnected as in the furthest slave module 1, the supply voltage or a predetermined percentage thereof is applied as the second voltage at the status input connector 30. The second voltage may be a DC voltage. In one embodiment, the second voltage corresponds to the trigger voltage U_{T} or to a predetermined percentage thereof.

An ohmic sensing input resistor 32 may be additionally arranged in series between the processing unit 10, in particular the actual sensing input 13, on the one hand and the status input connector 30 and the pull-up resistor 31 on the other hand (see Fig 2). As the characteristic of the sensing input resistor 32 with regard to the voltage measurement is predetermined and known, it can be considered to form part of the sensing input 13.

The reference potential applicator is stronger than the electrical second potential applicator. If the slave module 1 is not the furthest slave module 1 in Fig. 1, its status input connector 30 is connected to the status output connector 40 of the following slave module 1. Accordingly, the second potential applicator cannot uphold the second voltage at the status input connector 30 of the present slave module 1. The reference potential applicator of the following slave module 1 pulls the voltage down from the second voltage to an idle voltage U₀. The idle voltage U₀ may be at least approximately 0 V with respect to the reference potential. For example, an absolute value of the idle voltage U₀ is 0,5 V at the maximum, maybe 0,3 V at the maximum.

In other words, the pull-down discharger is dominant with respect to the pull-up supply of a congeneric slave module 1. In one embodiment, the ohmic resistance of the pull-up resistor 32 is at least two times, for example at least five times an ohmic resistance of the pull-down resistor 42. Hence, if the status input connector 30 of the present slave module 1 is connected to the status output connector 40 of the following slave module 1, the majority of the voltage drop between the supply voltage bypass in present slave module 1 and the reference potential bypass in the following slave module 1 occurs across the pull-up resistor 31 in the present slave module 1.

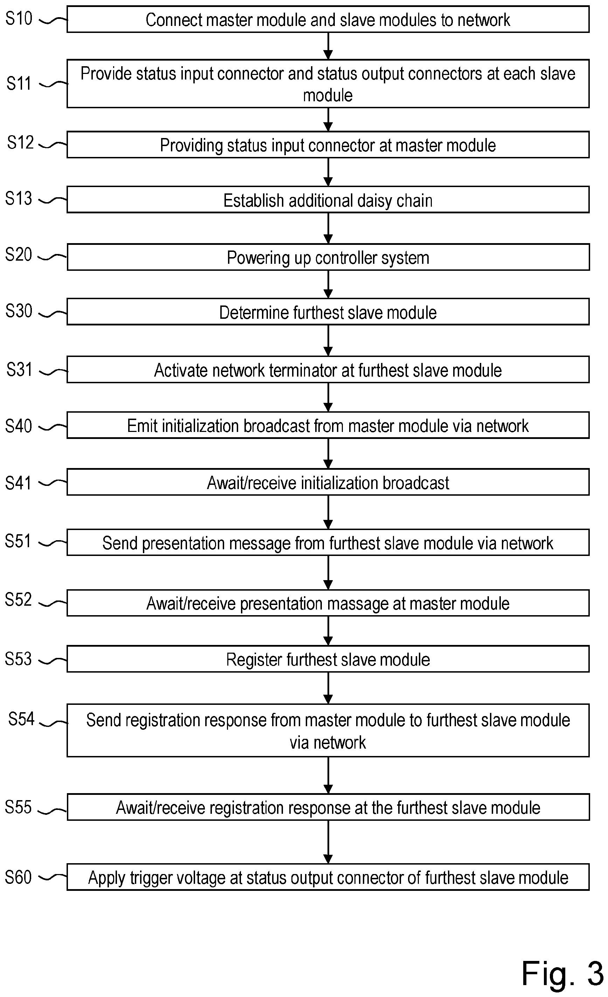

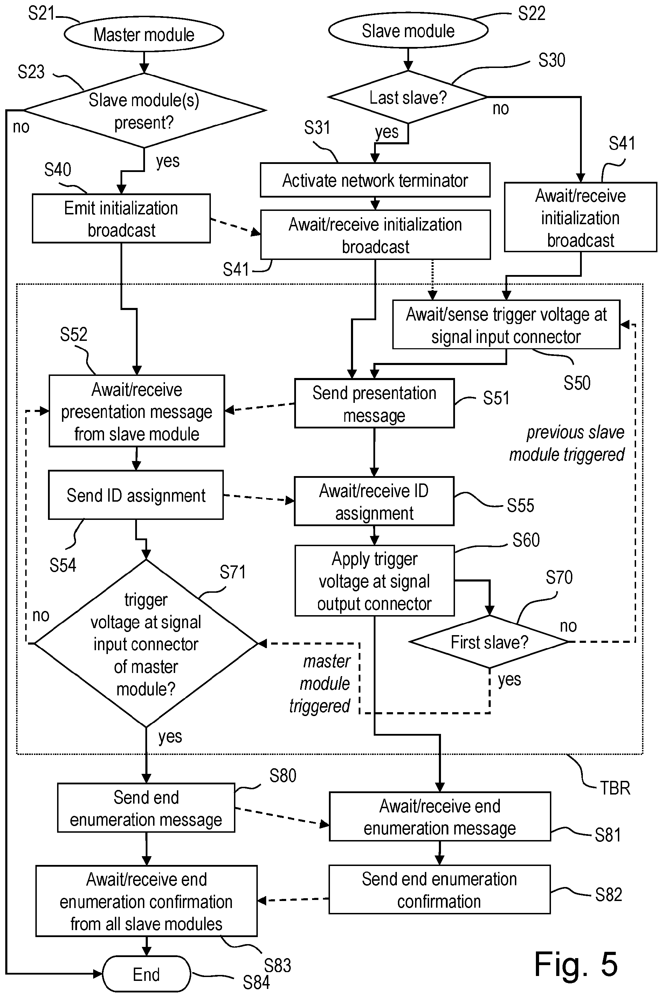

No slave module 1 of the controller system 100 applies the trigger voltage U_{T} to its status output connector 40 and hence to the status input connector 30 of the previous slave module 1 (see step S60 in Figs. 3 to 5) before the master module 50 has sent an initialization broadcast, see step S40 in Figs. 3 and 5. Hence, after powering up the controller system 100 (step S20 in Fig. 3 including steps S21 and S22 in Fig. 5) and before step S40, the second voltage (which may correspond to the trigger voltage U_{T}) applies at the unconnected status input connector 30 of the furthest slave module 1 only. For all other slave modules 1 and the master module 50, the idle voltage U₀ is applied at the respective status input connector 30 by the respective following slave module 1.

This is used in step S30 (see Figs. 3 and 5) to automatically determine the furthest slave module 1. The furthest slave module 1 itself automatically detects that it is the furthest slave module 1 by sensing the second voltage, which is different from the idle voltage U₀, at its status input connector 30 before having received the initialization broadcast from the master module 50.

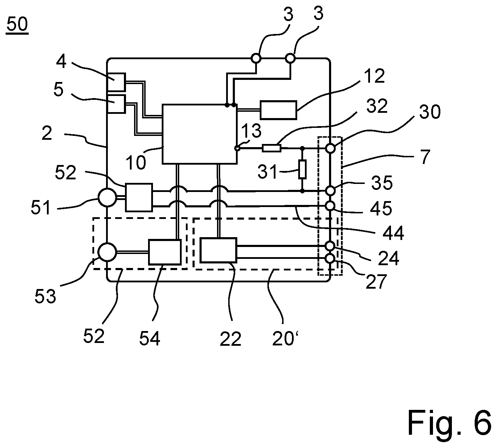

Fig. 6 shows an embodiment of a master module 50 that can be used for the controller system 100 in Fig. 1. Elements corresponding to elements of the slave module 1 shown in Fig. 2 are denoted with the same reference signs as in Fig. 2 and are not explained again.

In this exemplary embodiment, the master module 50 comprise a power supply unit including an external power input 51 and a switching power supply 52.

The master module 50 comprises a network adapter 20' for the network 90 with a network transceiver 22. Similar as in the slave module 1 in Fig. 1, the free-end-side network connectors 24, 27 may form part of the free-end-side connector means 7.

The master module 50 further has an external network adapter 52 for connection with an external network. For example, the external network adapter 52 may include an external network connector 53, e.g. an RJ-45 connector, and an external network transceiver 54 coupled to the external network connector 53 and the processing unit 10.

The master module 50 may be configured to terminate the network 90 (at the master-side end).

In the following, a method for the iterative registration of the slave modules 1 of the modular controller system 100 is described referring to Figs. 3 to 5.

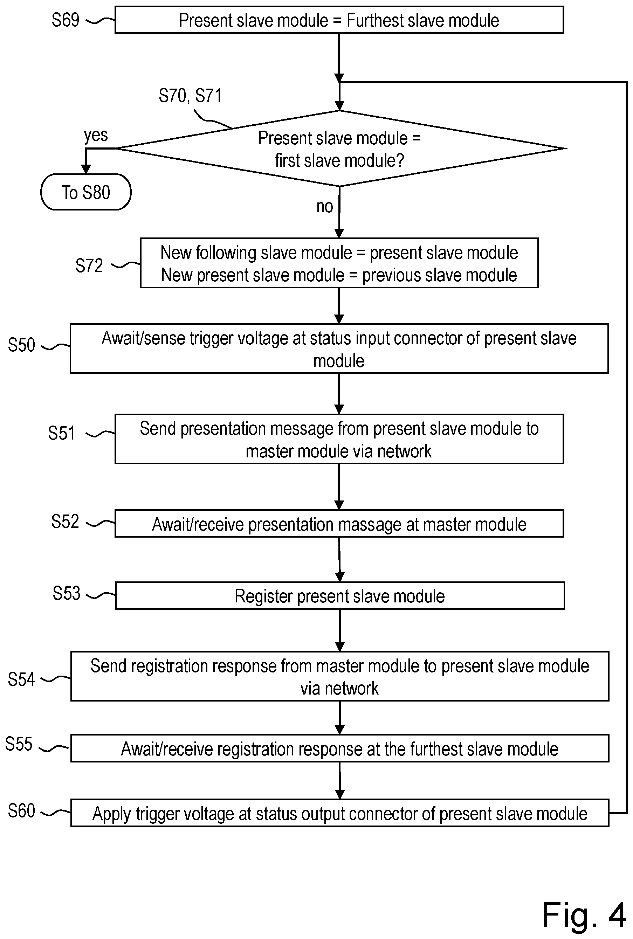

The right part of Fig. 5 shows the actions of the slave modules 1. The steps are in general the same for all slave modules 1. The steps shown in the section TBR are repeated, respectively for all slave modules 1. This corresponds to the repetition of the steps S70, S71 to S60 in Fig. 4.

At the beginning, the slave modules 1 are not registered with the master module 50 for targeted network traffic via the network 90. There is no information about a physical sequence/order of the slave modules 1.

In step S10 ("Connect master module and slave modules to network"), the master module 50 and all slave modules 1 are connected to the network 90. In any case, the network transceivers 22 of the master module 50 and slave modules 1 are connected to the network 90 in parallel. From a functional perspective, the master module 50 and the slave modules 1 are connected to the network in parallel as schematically illustrated in Fig. 1, even if the network 90 is bypassed though the individual slave modules 1 as explained with regard to Fig. 2.

According to step S20 ("Provide status input connector and status output connectors at each slave module"), each of the slave modules 1 is provided with a status input connector 30 and a status output connector 40 as explained above.

The method also may include providing the master module 50 with a status input connector 30, see step S12 in Fig. 3 ("Providing status input connector at master module") and Fig. 6.

According to step S13 ("Establish additional daisy chain"), the slave modules 1 are connected (in addition to their connection via the network 90) in series via their status input connectors 30 and their status output connectors 40. For each consecutive slave modules 1, the status output connector 40 of the following one of the consecutive slave modules 1 is electrically connected to the status input connector 30 of the present one of the consecutive slave modules 1. The status input connector 30 of the furthest slave module 1 remains unconnected. The status output connector 40 of the first slave module 1, which is next to the master module 50, may be connected with the status input connector 30 of the master module 50. In this way, the slave modules 1 and the master module 50 are connected in series by trigger cascade chain separate from the network 90.

In addition, step S13 may include electrically connecting one of, several of, or all of the connectors 40, 33, 43, 22, 25 of the master-side connection means 6 of the slave modules 1 to the corresponding connectors 30, 35, 45, 44, 24, 27 of the respective previous module 1, 50. Accordingly, steps S13 can include step S10.

Furthermore, S13 can include electrically connecting the supply voltage bridges of all slave modules 1 and the supply voltage output connector 35 of the master module 50 in series and/or electrically connecting the reference potential bridges of all slave modules 1 with the reference potential output connector 45 of the master module 50 in series.

Naturally, the whole free-end-side connection means 7 of the furthest slave module 1 may remain unconnected.

In step S20 ("Powering up controller system"), the controller system 100 is activated. This includes powering up of the master module 50, see step S21 in Fig. 5, for example by supplying external power to the external power supply 51 shown in Fig. 6 and/or by switching on the master module 50. Step S20 also include powering up the slave modules 1, see step S22 in Fig. 5. Electric power from the master module 50 may be forwarded to and bypassed through all slave modules 1 until the furthest slave module 1 is provided with electric power.

The slave modules 1 automatically enter an incipient state upon powering up. Steps S30 and S31 are performed during the incipient state.

The slave modules 1 switch from the incipient state to an enumeration state only upon receipt of the initialization broadcast from the master module 50, see steps 40 in Figs. 3 and 5 and step 41 in Fig. 5. As long as the slave modules have not received the initialization broadcast (see step S41 in Fig. 5), they remain in the incipient state. In the incipient state, no one of the slave modules 1 applies the trigger voltage U_{T} at its respective status output connector 40 (see steps S60in Figs. 3 to 5) and no one of the slave modules 1 sends a presentation message to the master module 50.

In step S30 ("Determine furthers slave module", see Fig. 3), the furthest slave module 1 is automatically determined. The processing unit 10 of each slave module 1 senses the voltage applied to its status input connector 30. As the status input connector 30 of the furthest slave module 1 is unconnected, its second potential applicator applies the second voltage (which may be the same as the trigger voltage U_{T}) at this status input connector 30. By sensing the second voltage in step S30, the processing unit 30 of the slave module 1 automatically determines that this slave module 1 is the furthest slave module 1. For all other slave modules 1, the voltage applied at the respective status input connector 30 is pulled down to the idle voltage U₀ (due to the electrical connection with the status output connector 40 and the reference potential applicator of the following slave module 1). The furthest slave module 1 stores that it is the furthest slave module 1, for example by storing this information in the memory 12.

In step S31 ("Activate network terminator at furthest slave module"), the furthest slave module 1 then automatically activates its network terminator 21 for physical termination the network 90. As steps S30 and S31 are completely performed by the furthest slave module 31, this happens independently from the master module 50 and the other slave modules 1.

After having performed step S30 and, if applicable, step S31, the slave modules 1 (including especially the furthest slave module 1) await receiving the initialization broadcast from the master module 50 via the network 90.

The master module 50 may check in an optional step S23 ("Slave module(s) present?") whether any slave module 1 is connected with the status input connector 30 of the master module 50 in a corresponding manner. Step S23 is shown in Fig. 5. There is no slave module 1, the master module 50 ends the registration of slave module1 (see step 84 in Fig. 5).

The method may include a pre-determined waiting time (e.g. in the range from 20 ms to 3000 ms) from powering up of the master module 50 before the master module 50 emits the initialization broadcast. This ensures sufficient time for reliably performing steps S30 and S31.

In step S40, the master module 50 emits the initialization broadcast via the network 90. In step 41 ("*Await*/*receive initialization broadcast"),* each of the slave modules 1 receives the initialization broadcast with its respective network adapter 20 and, as a consequence, switches from the incipient state to the enumeration state. The initialization broadcast may include address information such that the slave modules 1 can specifically address messages to the master module 50, e.g. a network ID of the master module 50 in the network 90.

Upon reception of the initialization broadcast, the furthest slave module 1 sends a presentation message to the master module 50 via the network 90, see step S51 ("Send presentation message from furthest slave module via network") in Fig. 3 and first iteration of step S51 in Fig. 5.

As the furthest slave module 1 has already determined that it is the furthest one, it can directly proceed to step S51. However, in particular if the second voltage corresponds to the trigger voltage U_{T}, the furthest slave module 1 may proceed - like the other slave modules 1 - from step S41 to step S50 first (see dotted arrow in Fig. 5). As the second voltage/trigger voltage U_{T} is still applied at its signal input connector 30 by its own second potential applicator, it further proceeds from step S50 to step S51.

In step S52 ("Await/receive presentation massage at master module") of Fig. 3 and the first iteration of step S52 in Fig. 5, the master module 50 receives the presentation message from the furthest slave module 1. As this presentation message is the first one received by the master module 50, the master module can determine that this (first) presentation must originate from the furthest slave module 1. In this way, the master module 50 obtains a first information regarding the physical sequence of the slave modules 1. The presentation message may comprise information for specifically addressing the furthest slave module 1, e.g. a hardware address such as a Media-Access-Control (MAC) address or the like.

The master module 50 registers the furthest slave module 1 for further network communication, see step S53 ("Register furthest slave module") in Fig. 3. The master module 50 may assign a unique network ID to the furthest slave module 1.

Then, the master module 50 sends a registration response to the furthest slave module 1 via the network 90, see step S54 ("Send registration response from master module to furthest slave module via network") in Fig. 3 and first iteration of step S54 in Fig. 5. The registration response may include information on the assigned unique network ID.

The furthest slave module 1 awaits and receives the registration response from the master module 50 with its network adapter 20, see step S55 ("Await/receive registration response at the furthest slave module") in Fig. 3 and first iteration of step S55 in Fig. 5.

The individual registration cycle for the furthest slave module 1 is now completed. Thereupon, the furthest slave module 1 applies, by means of its processing unit 10, especially by means of the trigger output 14 of the latter, the trigger voltage U_{T} to its status output connector 40, see step S60 ("Apply trigger voltage at status output connector of furthest slave module") in Fig. 3 and first iteration of step S60 in Fig. 5.

The trigger output 14 is stronger than the reference potential applicator. If the trigger output 14 is enabled, it pulls up the voltage at the status output connector 40 from the idle voltage U₀ to the trigger voltage U_{T}.

At this moment, the furthest slave module 1 is still considered the "present" slave module 1 in terms of the repetitions in the section TBR of Fig. 5 and step S69 ("Present slave module = Furthest slave module") in Fig. 4.

In steps S70 and S71 it is determined whether the present slave module 1 is the first slave 1, i.e. the slave module 1 directly following the master module 50 in the daisy chain / trigger cascade chain.

As can be seen in step S70 ("First slave?") in Fig. 5, if the present slave module 1 is not the first slave module 1, the status input connector 30 of the previous slave module 1 is electrically connected with the status output connector 40 of the present slave module 1 and hence, at step S70, the trigger voltage U_{T} is applied at the status input connector 30 of the previous slave module 1.

In other words, the previous slave module 1 is triggered by the present slave module 1 for starting the next registration cycle for registering the previous slave module 1. This may correspond to the next iteration of the section TBR in Fig. 5 for the previous slave module 1.

Correspondingly, said previous slave module 1 constitutes the present slave module 1 in the next iteration of section TBR in Fig. 5, see also step S72 in Fig. 4. The former present slave module 1 may be denoted as the "following" slave module 1 in this next iteration (see also step S72 in Fig. 4). This next iteration in Fig. 5 starts with a new iteration of step S50 for the "new" present slave module 1.

The steps S51 to S60 in Fig. 4 are the same as in Fig. 3 and do not need to be explained again in detail. The only difference is that the present slave module 1 is different from the furthest slave module 1. The specific way of illustration in Figs. 3 and 4 is merely chosen to highlight the important aspect of starting the iterative registration with the registration of the furthest slave module 1 as shown in Fig. 3.

As can be seen in step S70 ("First slave?") in Fig. 5, if the present slave module 1 is the first slave module 1, the status input connector 30 of the master 50 is electrically connected with the status output connector 40 of the present, first slave module 1. Hence, at step S70, the trigger voltage U_{T} is now applied at the status input connector 30 of the master module 50 for the first time, see step S71 in Fig. 5 ("trigger voltage at signal input connector of master module?"). In response thereto, the master module 50 may proceed with step S80.

Alternatively or additionally, the master module 50 may proceed with step S80 if it determines a time-out condition. For example, the time-out condition may include that the master module 50 has not received a (further) salve presentation message for a pre-determined period of time.

In step S80 ("Send end enumeration message"), which is shown in Fig. 5, the master module sends an end enumeration message to the slave modules 1 via the network 90. The end enumeration message can be a broadcast and/or include messages specifically targeted to the individual slave modules 1.

In step S81 ("Await/receive end enumeration message"), the slave modules 1 receive the end enumeration message. In response thereto, they may switch out of the enumeration state.

Each slave module 1 sends a corresponding end enumeration confirmation to the master module 50 in step S82.

In step S83, the master module 50 awaits and receives the end enumeration messages from all slave modules 1. When all confirmations are received, the method is finished.

Based on a time sequence in which the master module 50 receives the presentation messages from the slave modules 1 in the consecutive iterations of the section TBR in Fig. 5 (and the repetition cycle in Fig. 4), the master module 50 can conclude the physical sequence/positions of all slave modules 1 in the daisy chain. The master module 50 may be configured to automatically determine, and optionally store - e.g. in its memory 12 - a correspondence between the physical positions and the logic addresses (e.g. the network IDs) of the slave modules.

In this way the slave modules 1 can be easily identified and addressed by any software in the master module 50 that is governing the controller system 100.

According to one aspect, the slave module 1 may perform the steps S51 to S60 only while it is in a configuration mode. The controller system 100 is configured that only one of the salve modules 1 can be in the configuration mode at the same time. The slave modules 1 switch to the configuration mode only individually directly before performing step S51, respectively. Step S60 may include ending the configuration mode in the respective slave module 1.

The trigger cascade chain may employ simple TTL/CMOS logic.

For each slave module 1 (and optionally for the master module 1), the processing unit 10 can be configured to determine at least three different logical situations at the status input connector 30:
- The status input connector 30 is unconnected.
- The status input connector 30 is electrically connected to a following slave module 1 and the following slave module 1 is not triggering.
- The status input connector 30 is electrically connected to a following slave module 1 and the following slave module 1 is triggering.

In a modification, step S60 in Figs. 3 to 5 include applying a pulsed trigger signal at the status output connector 40. The pulsed trigger signal may include repeated pulses with the trigger voltage U_{T}. This may facilitate to distinguish between the second voltage and the trigger signal even if the second voltage corresponds to the trigger voltage U_{T}. In each slave module 1 (and optionally the master module 50), the processing unit 10 may be configured to recognize the specific trigger signal by sensing the voltage applied to the status input connector 30.

The controller system 100 and the disclosed method for the iterative registration of slave modules 1 of the modular controller system 100 allow a fully automatic termination of the network 90 at the physical end of the sequence of the slave modules 1, i.e. at the furthest slave module 1 (automatic termination). Furthermore, all slave modules 1 are automatically included into the network communication of the network 90 in a fully automatic manner (automatic enumeration). The automatic enumerations starts with the furthest slave module 1 goes backward until the master module 1. In addition, the master module 50 can automatically infer the physical positions of the individual slave modules 1 without additional input, e.g. additional manual input by a user. Therefore, the controller system 100 and the disclosed method facilitate the commissioning of the modular controller system 100.

Apart from that, as the network transceivers 22 are connected to the network 90 in parallel, the high performance and cost-effectiveness of the fieldbus can be used. Forwarding delays that may occur in daisy chain network applications, which are caused to delay caused by microcontroller/microprocessor units to forward network messages from an incoming network port to an outgoing network port are avoided.

## Claims

1. Slave module (1) for a modular controller system (100) employing an industrial network (90) for communication within the controller system (100), the modular controller system (100) comprising a master module (50),
wherein the slave module (1) comprises:
a processing unit (10); and
a network adapter (20) for the network (90), wherein the network adapter (20) is operatively coupled to the processing unit (10);
wherein the slave module (1) includes a separate status input connector (30) coupled to the processing unit (10) and a separate status output connector (40) coupled to the processing unit (10);
wherein the processing unit (10) is capable of sensing a voltage applied at the status input connector (30) with respect to an electric reference potential,
**characterized in that** the processing unit (10) is capable to apply a trigger voltage at the status output connector (40) with respect to the reference potential;
wherein the slave module (1) is configured to, in an enumeration state,
- send, upon the processor unit (10) sensing that the trigger voltage is applied at the status input connector (30), a presentation message to the master module (50) via its network adapter (20) and the network (90),
- apply, upon receiving a registration response from the master module (50) at the network adapter (20), the trigger voltage at the status output connector (40) by means of the processing unit (10).

2. The slave module (1) according to claim 1, wherein the master module (50) of the controller system (100) is further configured to emit an initialization broadcast via the network (90),
wherein the slave module (1) is configured to, in an incipient state,
- switch, upon receiving the initialization broadcast at the network adapter (20), from the incipient state to the enumeration state.

3. The slave module (1) according to claim 2, wherein the slave module (1) is configured to apply, in the incipient state and the enumeration state, an idle voltage, which is different from the trigger voltage, at its status output connector (40) with respect to the reference potential until it applies the trigger voltage at the status output connector (40) in the enumeration state by means of the processing unit (10).

4. The slave module (1) according to claim 3, wherein the slave module (1) includes an activatable network terminator (21) for terminating the network (90) at the slave module (1),
wherein the slave module (1) is configured to, in the incipient state,
- automatically activate the network terminator (21) unless the processing unit (10) senses that the idle voltage is applied at the status input connector (30).

5. The slave module (1) according to claim 3 or 4, wherein an absolute value of the idle voltage is 0,5 V at the maximum.

6. The slave module (1) according to any one of the preceding claims, wherein the slave module (1) comprises:
a trigger output (14) of the processing unit (10), which is connected to the status output connector (40), for applying the trigger voltage;
an electric reference potential applicator (41, 43, 44), e.g. a pull-down discharger, which is electrically connected to the status output connector (40) for applying the reference potential to the output connector (40) when the trigger voltage is not applied by the processing unit (10); and
an electric second potential applicator (31, 33, 34), e.g. a pull-up supply, which is electrically connected with the status input connector (30) for applying a second voltage with respect to the reference potential to the status input connector (30), wherein the reference potential applicator (41, 43, 44) is stronger than the second potential applicator (31, 33, 34), and wherein the trigger output (14) is stronger than the reference potential applicator (41, 43, 44).

7. The slave module (1) according to claim 6, wherein the second voltage is identical to the trigger voltage.

8. The slave module (1) according to any one of the preceding claims, wherein the slave module (1) is configured to automatically enter the incipient state upon powering up.

9. The slave module (1) according to any one of the preceding claims, wherein the network (90) is a fieldbus, for example a CAN bus, and wherein the network adapter (20) is a corresponding fieldbus adapter.

10. Controller system (100) for employing an industrial network (90) for communication within the controller system (100), wherein the controller system (100) comprises a master module (50) and at least two slave modules (1),
**characterized in that** the at least two slave modules (1) are formed according to any one of the preceding claims.

11. Controller system (100) according to claim 10, wherein the master module (50) includes
a processing unit (10);
a network adapter (20') for the network (90), wherein the network adapter (20') is operatively coupled to the processing unit (10) of the master module (50); and
a separate status input connector (30), wherein the processing unit (10) of the master module (50) is capable of sensing a voltage applied at the status input connector (30) of the master module (50) with respect to the electric reference potential;
wherein the master module (50) and the slave modules (1) are connected via the network (90);
wherein the status input connector (30) of the master module (50) is additionally electrically connected to the status output connector (40) of a first slave module (1) of the slave modules (1), and
wherein the slave modules (1) are additionally connected in series by electrically connecting, respectively for subsequent slave modules (1), the status input connector (30) of the respective slave module (1) to the status output connector (40) of the following slave module (1).

12. Method for starting the iterative registration of slave modules (1) of a modular controller system (100), the controller system (100) having a master module (50) and the controller system (100) employing an industrial network (90) for communication within the controller system (100), with the registration of a furthest slave module (1) of the slave modules (1),
wherein each of the slave modules (1) and the master module (50) respectively comprise a processing unit (10) and a network adapter (20, 20') for the network (90) coupled to the processing unit (10), and wherein each of the slave modules (1) is provided, in addition to its network adapter (20), with a status input connecter (30) coupled to its processing unit (10) and a status output connector (40) coupled to its processing unit (10) and wherein the slave modules (1) are connected in series in that, respectively for subsequent slave modules (1), the status input connector (30) of the slave module (1) is electrically connected to the status output connector (40) of the following slave module (1);
**characterized in that** the method includes:
- automatically determining the furthest slave module (1) of the slave modules (1) by the furthest slave module (1) detecting that its status input connector (30) is not connected to the status output connector (40) of any other of the slave modules (1);
- emitting an initialization broadcast from the master module (50) via the network (90) for switching the slave modules (1) to an enumeration state;
- sending a presentation message from the furthest slave module (1) to the master module (50) via the network (90);
- sending with the master module (90), upon receiving the presentation message from the furthest slave module (1), a registration response for the furthest slave module (1) via the network (90);
- applying, upon receiving the registration response for the furthest slave module (1) by the latter, a trigger voltage at the status output connector (40) of the furthest slave module (1) with respect to an electric reference potential by means of the processing unit (10) of the furthest slave module (1).

13. Method according to claim 12, further including iteratively repeating in the enumeration state, respectively for each of the remaining slave module(s) (1):
- sensing, by means of the processing unit (10) of the slave module (1), that the electric trigger voltage is applied at the status input connector (30) of the slave module (1) by the following slave module (1);
- sending a presentation message from the slave module (1) to the master module (50) via the network (90);
- sending with the master module (50), upon receiving the presentation message from the slave module (1), a registration response for the slave module (1) via the network (90);
- applying, upon receiving the registration response for the slave module (1) by the latter, the trigger voltage at the status output connector (40) of the slave module (1) by means of the processing unit (10) of the slave module (1).

14. Method according to claim 12 or 13, further including that the furthest slave module (1) independently automatically activates, upon detecting that its status input connector (30) is not connected to the status output connector (40) of any other of the slave modules (1), a network terminator (21) thereof for physical termination the network (90) at the furthest slave module (1).

15. Method according to any one of the claims 12 to 14 further including
- electrically connecting the status output connector (40) of a first slave module (1) of the slave modules (1) to a status input connector (30) of the master module (50); and
- determining, by the master module (50), the end of the iterative registration of the slave modules (1) upon sensing that the trigger voltage is applied at the status input connector (30) of the master module (50).

## Patentansprüche

1. Slave-Modul (1) für ein modulares Steuerungssystem (100), das ein industrielles Netzwerk (90) zur Kommunikation innerhalb des Steuerungssystems (100) verwendet, wobei das modulare Steuerungssystem (100) ein Master-Modul (50) umfasst,
wobei das Slave-Modul (1) Folgendes umfasst:
eine Verarbeitungseinheit (10); und
einen Netzwerkadapter (20) für das Netzwerk (90), wobei der Netzwerkadapter (20) operativ mit der Verarbeitungseinheit (10) gekoppelt ist;
wobei das Slave-Modul (1) einen separaten Statuseingangsverbinder (30), der mit der Verarbeitungseinheit (10) gekoppelt ist, und einen separaten Statusausgangsverbinder (40), der mit der Verarbeitungseinheit (10) gekoppelt ist, beinhaltet;
wobei die Verarbeitungseinheit (10) in der Lage ist, eine an dem Statuseingangsverbinder (30) angelegte Spannung mit Bezug auf ein elektrisches Referenzpotenzial zu erfassen,
**dadurch gekennzeichnet, dass** die Verarbeitungseinheit (10) in der Lage ist, eine Triggerspannung an dem Statusausgangsverbinder (40) in Bezug auf das Referenzpotenzial anzulegen;
wobei das Slave-Modul (1) in einem Aufzählungszustand zu Folgendem ausgelegt ist:
- Senden, wenn die Prozessoreinheit (10) erfasst, dass die Triggerspannung an dem Statuseingangsverbinder (30) anliegt, einer Präsentationsnachricht über ihren Netzwerkadapter (20) und das Netzwerk (90) an das Master-Modul (50),
- Anlegen, bei Empfang einer Registrierungsantwort von dem Master-Modul (50) an dem Netzwerkadapter (20), der Triggerspannung an dem Statusausgangsverbinder (40) mittels der Verarbeitungseinheit (10).

2. Slave-Modul (1) nach Anspruch 1, wobei das Master-Modul (50) des Steuerungssystems (100) ferner dazu ausgelegt ist, einen Initialisierungs-Broadcast über das Netzwerk (90) auszusenden,
wobei das Slave-Modul (1) in einem Anfangszustand zu Folgendem ausgelegt ist:
- Umschalten, bei Empfang des Initialisierungs-Broadcast an dem Netzwerkadapter (20), von dem Anfangszustand in den Aufzählungszustand.

3. Slave-Modul (1) nach Anspruch 2, wobei das Slave-Modul (1) dazu ausgelegt ist, in dem Anfangszustand und dem Aufzählungszustand eine Leerlaufspannung, die von der Triggerspannung verschieden ist, an seinem Statusausgangsverbinder (40) in Bezug auf das Referenzpotenzial anzulegen, bis es in dem Aufzählungszustand die Triggerspannung mittels der Verarbeitungseinheit (10) an dem Statusausgangsverbinder (40) anlegt.

4. Slave-Modul (1) nach Anspruch 3, wobei das Slave-Modul (1) ein aktivierbares Netzwerkabschlusselement (21) zum Abschließen des Netzwerks (90) an dem Slave-Modul (1) beinhaltet,
wobei das Slave-Modul (1) in dem Anfangszustand zu Folgendem ausgelegt ist:
- automatisches Aktivieren des Netzwerkabschlusselements (21), sofern die Verarbeitungseinheit (10) nicht erfasst, dass die Leerlaufspannung an dem Statuseingangsverbinder (30) anliegt.

5. Slave-Modul (1) nach Anspruch 3 oder 4, wobei ein Absolutwert der Leerlaufspannung maximal 0,5 V beträgt.

6. Slave-Modul (1) nach einem der vorhergehenden Ansprüche, wobei das Slave-Modul (1) Folgendes umfasst:
einen Triggerausgang (14) der Verarbeitungseinheit (10), der mit dem Statusausgangsverbinder (40) verbunden ist, zum Anlegen der Triggerspannung;
einen elektrischen Referenzpotenzialapplikator (41, 43, 44), z. B. eine Pull-Down-Entladungseinrichtung, der elektrisch mit dem Statusausgangsverbinder (40) verbunden ist, zum Anlegen des Referenzpotenzials an den Ausgangsverbinder (40), wenn die Triggerspannung nicht durch die Verarbeitungseinheit (10) angelegt wird; und
einen elektrischen zweiten Potenzialapplikator (31, 33, 34), z. B. eine Pull-Up-Versorgung, der elektrisch mit dem Statuseingangsverbinder (30) verbunden ist, zum Anlegen einer zweiten Spannung in Bezug auf das Referenzpotenzial an den Statuseingangsverbinder (30), wobei der Referenzpotenzialapplikator (41, 43, 44) stärker als der zweite Potenzialapplikator (31, 33, 34) ist und wobei der Triggerausgang (14) stärker als der Referenzpotenzialapplikator (41, 43, 44) ist.

7. Slave-Modul (1) nach Anspruch 6, wobei die zweite Spannung mit der Triggerspannung identisch ist.

8. Slave-Modul (1) nach einem der vorhergehenden Ansprüche, wobei das Slave-Modul (1) dazu ausgelegt ist, beim Einschalten automatisch in den Anfangszustand einzutreten.

9. Slave-Modul (1) nach einem der vorhergehenden Ansprüche, wobei das Netzwerk (90) ein Feldbus, zum Beispiel ein CAN-Bus, ist und wobei der Netzwerkadapter (20) ein entsprechender Feldbusadapter ist.

10. Steuerungssystem (100) zum Verwenden eines industriellen Netzwerks (90) zur Kommunikation innerhalb des Steuerungssystem (100), wobei das Steuerungssystem (100) ein Master-Modul (50) und mindestens zwei Slave-Module (1) umfasst,
**dadurch gekennzeichnet, dass** die mindestens zwei Slave-Module (1) nach einem der vorhergehenden Ansprüche ausgebildet sind.

11. Steuerungssystem (100) nach Anspruch 10, wobei das Master-Modul (50) Folgendes beinhaltet:
eine Verarbeitungseinheit (10);
einen Netzwerkadapter (20') für das Netzwerk (90), wobei der Netzwerkadapter (20') operativ mit der Verarbeitungseinheit (10) des Master-Moduls (50) gekoppelt ist; und
einen separaten Statuseingangsverbinder (30), wobei die Verarbeitungseinheit (10) des Master-Moduls (50) in der Lage ist, eine Spannung, die an den Statuseingangsverbinder (30) des Master-Moduls (50) angelegt wird, in Bezug auf das elektrische Referenzpotenzial zu erfassen;
wobei das Master-Modul (50) und die Slave-Module (1) über das Netzwerk (90) verbunden sind;
wobei der Statuseingangsverbinder (30) des Master-Moduls (50) zusätzlich mit dem Statusausgangsverbinder (40) eines ersten Slave-Moduls (1) der Slave-Module (1) elektrisch verbunden ist und
wobei die Slave-Module (1) zusätzlich in Reihe geschaltet sind, indem jeweils für aufeinanderfolgende Slave-Module (1) der Statuseingangsverbinder (30) des jeweiligen Slave-Moduls (1) mit dem Statusausgangsverbinder (40) des nachfolgenden Slave-Moduls (1) elektrisch verbunden ist.

12. Verfahren zum Starten der iterativen Registrierung von Slave-Modulen (1) eines modularen Steuerungssystems (100), wobei das Steuerungssystem (100) ein Master-Modul (50) aufweist und das Steuerungssystem (100) ein industrielles Netzwerk (90) zur Kommunikation innerhalb des Steuerungssystems (100) verwendet, mit der Registrierung eines am weitesten entfernten Slave-Moduls (1) der Slave-Module (1),
wobei jedes der Slave-Module (1) und des Master-Moduls (50) jeweils eine Verarbeitungseinheit (10) und einen Netzwerkadapter (20, 20') für das Netzwerk (90), der mit der Verarbeitungseinheit (10) gekoppelt ist, umfasst und wobei jedes der Slave-Module (1) zusätzlich zu seinem Netzwerkadapter (20) mit einem Statuseingangsverbinder (30), der mit seiner Verarbeitungseinheit (10) gekoppelt ist, und einem Statusausgangsverbinder (40), der mit seiner Verarbeitungseinheit (10) gekoppelt ist, versehen ist und wobei die Slave-Module (1) in Reihe geschaltet sind, indem jeweils für aufeinanderfolgende Slave-Module (1) der Statuseingangsverbinder (30) des Slave-Moduls (1) mit dem Statusausgangsverbinder (40) des nachfolgenden Slave-Moduls (1) elektrisch verbunden ist;
**dadurch gekennzeichnet, dass** das Verfahren Folgendes beinhaltet:
- automatisches Bestimmen des am weitesten entfernten Slave-Moduls (1) der Slave-Module (1), indem das am weitesten entfernte Slave-Modul (1) detektiert, dass sein Statuseingangsverbinder (30) nicht mit dem Statusausgangsverbinder (40) eines anderen der Slave-Module (1) verbunden ist;
- Aussenden eines Initialisierungs-Broadcast von dem Master-Modul (50) über das Netzwerk (90) zum Umschalten der Slave-Module (1) in einen Aufzählungszustand;
- Senden einer Präsentationsnachricht von dem am weitesten entfernten Slave-Modul (1) an das Master-Modul (50) über das Netzwerk (90);
- Senden, mit dem Master-Modul (90), bei Empfang der Präsentationsnachricht von dem am weitesten entfernten Slave-Modul (1), einer Registrierungsantwort für das am weitesten entfernte Slave-Modul (1) über das Netzwerk (90);
- Anlegen, bei Empfang der Registrierungsantwort für das am weitesten entfernte Slave-Modul (1) durch dieses, einer Triggerspannung an dem Statusausgangsverbinder (40) des am weitesten entfernten Slave-Moduls (1) in Bezug auf ein elektrisches Bezugspotenzial mittels der Verarbeitungseinheit (10) des am weitesten entfernten Slave-Moduls (1).

13. Verfahren nach Anspruch 12, das ferner iteratives Wiederholen von Folgendem in dem Aufzählungszustand jeweils für jedes der verbleibenden Slave-Modul(e) (1) beinhaltet:
- Erfassen, mittels der Verarbeitungseinheit (10) des Slave-Moduls (1), dass die elektrische Triggerspannung am Statuseingangsverbinder (30) des Slave-Moduls (1) angelegt wird, durch das folgende Slave-Modul (1);
- Senden einer Präsentationsnachricht von dem Slave-Modul (1) an das Master-Modul (50) über das Netzwerk (90);
- Senden, mit dem Master-Modul (50), bei Empfang der Präsentationsnachricht von dem Slave-Modul (1), einer Registrierungsantwort für das Slave-Modul (1) über das Netzwerk (90);
- Anlegen, bei Empfang der Registrierungsantwort für das Slave-Modul (1) durch dieses, der Triggerspannung an dem Statusausgangsverbinder (40) des Slave-Moduls (1) mittels der Verarbeitungseinheit (10) des Slave-Moduls (1).

14. Verfahren nach Anspruch 12 oder 13, das ferner beinhaltet, dass das am weitesten entfernte Slave-Modul (1) bei Detektion, dass sein Statuseingangsverbinder (30) nicht mit dem Statusausgangsverbinder (40) eines anderen der Slave-Module (1) verbunden ist, unabhängig automatisch ein Netzwerkabschlusselement (21) davon zum physischen Abschließen des Netzwerks (90) an dem am weitesten entfernten Slave-Modul (1) aktiviert.

15. Verfahren nach einem der Ansprüche 12 bis 14, das ferner Folgendes beinhaltet:
- elektrisches Verbinden des Statusausgangsverbinders (40) eines ersten Slave-Moduls (1) der Slave-Module (1) mit einem Statuseingangsverbinder (30) des Master-Moduls (50); und
- Bestimmen, durch das Master-Modul (50), des Endes der iterativen Registrierung der Slave-Module (1), wenn erfasst wird, dass die Triggerspannung an dem Statuseingangsverbinder (30) des Master-Moduls (50) anliegt.

## Revendications

1. Module esclave (1) pour un système de contrôleur (100) modulaire utilisant un réseau industriel (90) pour la communication à l'intérieur du système de contrôleur (100), le système de contrôleur (100) modulaire comprenant un module maître (50),
dans lequel le module esclave (1) comprend :
une unité de traitement (10) ; et
un adaptateur de réseau (20) pour le réseau (90), dans lequel l'adaptateur de réseau (20) est couplé de manière opérationnelle à l'unité de traitement (10) ;
dans lequel le module esclave (1) comporte un connecteur d'entrée d'état (30) séparé couplé à l'unité de traitement (10) et un connecteur de sortie d'état (40) séparé couplé à l'unité de traitement (10) ;
dans lequel l'unité de traitement (10) est capable de détecter une tension appliquée au niveau du connecteur d'entrée d'état (30) par rapport à un potentiel de référence électrique,
**caractérisé en ce que** l'unité de traitement (10) est capable d'appliquer une tension de déclenchement au niveau du connecteur de sortie d'état (40) par rapport au potentiel de référence ;
le module esclave (1) étant configuré pour, dans un état d'énumération,
- envoyer, lorsque l'unité de traitement (10) détecte que la tension de déclenchement est appliquée au connecteur d'entrée d'état (30), un message de présentation au module maître (50) via son adaptateur de réseau (20) et le réseau (90),
- appliquer, lors de la réception d'une réponse d'enregistrement provenant du module maître (50) au niveau de l'adaptateur de réseau (20), la tension de déclenchement au niveau du connecteur de sortie d'état (40) au moyen de l'unité de traitement (10).

2. Module esclave (1) selon la revendication 1, dans lequel le module maître (50) du système de contrôleur (100) est en outre configuré pour émettre une diffusion d'initialisation via le réseau (90),
dans lequel le module esclave (1) est configuré pour, dans un état initial,
- passer, lors de la réception de la diffusion d'initialisation au niveau de l'adaptateur de réseau (20), de l'état initial à l'état d'énumération.

3. Module esclave (1) selon la revendication 2, dans lequel le module esclave (1) est configuré pour appliquer, dans l'état initial et l'état d'énumération, une tension de repos, qui est différente de la tension de déclenchement, au niveau de son connecteur de sortie d'état (40) par rapport au potentiel de référence jusqu'à ce qu'il applique la tension de déclenchement au niveau du connecteur de sortie d'état (40) dans l'état d'énumération au moyen de l'unité de traitement (10).

4. Module esclave (1) selon la revendication 3, dans lequel le module esclave (1) comporte un terminateur de réseau (21) activable pour mettre fin au réseau (90) au niveau du module esclave (1),
dans lequel le module esclave (1) est configuré pour, dans l'état initial,
- activer automatiquement le terminateur de réseau (21) à moins que l'unité de traitement (10) ne détecte que la tension de repos est appliquée au niveau du connecteur d'entrée d'état (30).

5. Module esclave (1) selon la revendication 3 ou 4, dans lequel une valeur absolue de la tension de repos est de 0,5 V au maximum.

6. Module esclave (1) selon l'une quelconque des revendications précédentes, dans lequel le module esclave (1) comprend :
une sortie de déclenchement (14) de l'unité de traitement (10), qui est connectée au connecteur de sortie d'état (40), pour appliquer la tension de déclenchement ;
un applicateur (41, 43, 44) de potentiel de référence électrique, par exemple un déchargeur de rappel, qui est connecté électriquement au connecteur de sortie d'état (40) pour appliquer le potentiel de référence au connecteur de sortie (40) lorsque la tension de déclenchement n'est pas appliquée par l'unité de traitement (10) ; et
un deuxième applicateur (31, 33, 34) de potentiel électrique, par exemple une alimentation de rappel, qui est connecté électriquement au connecteur d'entrée d'état (30) pour appliquer une deuxième tension par rapport au potentiel de référence au connecteur d'entrée d'état (30), l'applicateur (41, 43, 44) de potentiel de référence étant plus fort que le deuxième applicateur (31, 33, 34) de potentiel, et la sortie de déclenchement (14) étant plus forte que l'applicateur (41, 43, 44) de potentiel de référence.

7. Module esclave (1) selon la revendication 6, dans lequel la deuxième tension est identique à la tension de déclenchement.

8. Module esclave (1) selon l'une quelconque des revendications précédentes, dans lequel le module esclave (1) est configuré pour entrer automatiquement dans l'état initial lors de la mise sous tension.

9. Module esclave (1) selon l'une quelconque des revendications précédentes, dans lequel le réseau (90) est un bus de terrain, par exemple un bus CAN, et dans lequel l'adaptateur de réseau (20) est un adaptateur de bus de terrain correspondant.

10. Système de contrôleur (100) pour utiliser un réseau industriel (90) pour la communication à l'intérieur du système de contrôleur (100), dans lequel le système de contrôleur (100) comprend un module maître (50) et au moins deux modules esclaves (1),
**caractérisé en ce que** les au moins deux modules esclaves (1) sont constitués selon l'une quelconque des revendications précédentes.

11. Système de contrôleur (100) selon la revendication 10, dans lequel le module maître (50) comporte une unité de traitement (10) ;
un adaptateur de réseau (20') pour le réseau (90), dans lequel l'adaptateur de réseau (20') est couplé de manière opérationnelle à l'unité de traitement (10) du module maître (50) ; et
un connecteur d'entrée d'état (30) séparé, dans lequel l'unité de traitement (10) du module maître (50) est capable de détecter une tension appliquée au niveau du connecteur d'entrée d'état (30) du module maître (50) par rapport au potentiel de référence électrique ;
dans lequel le module maître (50) et les modules esclaves (1) sont connectés via le réseau (90) ;
dans lequel le connecteur d'entrée d'état (30) du module maître (50) est en outre connecté électriquement au connecteur de sortie d'état (40) d'un premier module esclave (1) des modules esclaves (1), et
les modules esclaves (1) étant en outre connectés en série en connectant électriquement, respectivement pour des modules esclaves (1) subséquents, le connecteur d'entrée d'état (30) du module esclave (1) respectif au connecteur de sortie d'état (40) du module esclave (1) suivant.

12. Procédé de démarrage de l'enregistrement itératif de modules esclaves (1) d'un système de contrôleur (100) modulaire, le système de contrôleur (100) ayant un module maître (50) et le système de contrôleur (100) utilisant un réseau industriel (90) pour la communication à l'intérieur du système de contrôleur (100), avec l'enregistrement du module esclave (1) le plus éloigné des modules esclaves (1),
dans lequel chacun des modules esclaves (1) et le module maître (50) comprennent respectivement une unité de traitement (10) et un adaptateur de réseau (20, 20') pour le réseau (90) couplé à l'unité de traitement (10), et chacun des modules esclaves (1) étant prévu, en plus de son adaptateur de réseau (20), avec un connecteur d'entrée d'état (30) couplé à son unité de traitement (10) et un connecteur de sortie d'état (40) couplé à son unité de traitement (10) et les modules esclaves (1) étant connectés en série en ce que, respectivement pour des modules esclaves (1) subséquents, le connecteur d'entrée d'état (30) du module esclave (1) est connecté électriquement au connecteur de sortie d'état (40) du module esclave (1) suivant ;
**caractérisé en ce que** le procédé comporte :
- la détermination automatique du module esclave (1) le plus éloigné des modules esclaves (1) par la détection, par le module esclave (1) le plus éloigné, que son connecteur d'entrée d'état (30) n'est pas connecté au connecteur de sortie d'état (40) de l'un quelconque des autres modules esclaves (1) ;
- l'émission d'une diffusion d'initialisation depuis module maître (50) via le réseau (90) pour passer les modules esclaves (1) vers un état d'énumération ;
- l'envoi d'un message de présentation du module esclave (1) le plus éloigné au module maître (50) via le réseau (90) ;
- l'envoi avec le module maître (90), lors de la réception du message de présentation depuis le module esclave (1) le plus éloigné, d'une réponse d'enregistrement pour le module esclave (1) le plus éloigné via le réseau (90) ;
- l'application, lors de la réception de la réponse d'enregistrement pour le module esclave (1) le plus éloigné par ce dernier, d'une tension de déclenchement au niveau du connecteur de sortie d'état (40) du module esclave (1) le plus éloigné par rapport à un potentiel de référence électrique au moyen de l'unité de traitement (10) du module esclave (1) le plus éloigné.

13. Procédé selon la revendication 12, comportant en outre la répétition itérative dans l'état d'énumération de, respectivement pour chacun du ou des modules esclaves (1) restants :
- la détection, au moyen de l'unité de traitement (10) du module esclave (1), que la tension de déclenchement électrique est appliquée au niveau du connecteur d'entrée d'état (30) du module esclave (1) par le module esclave (1) suivant ;
- l'envoi d'un message de présentation du module esclave (1) au module maître (50) via le réseau (90) ;
- l'envoi avec le module maître (50), lors de la réception du message de présentation depuis le module esclave (1), d'une réponse d'enregistrement pour le module esclave (1) via le réseau (90) ;
- l'application, lors de la réception de la réponse d'enregistrement pour le module esclave (1) par ce dernier, de la tension de déclenchement au niveau du connecteur de sortie d'état (40) du module esclave (1) au moyen de l'unité de traitement (10) du module esclave (1).

14. Procédé selon la revendication 12 ou 13, comportant en outre le fait que le module esclave (1) le plus éloigné active automatiquement indépendamment, lors de la détection que son connecteur d'entrée d'état (30) n'est pas connecté au connecteur de sortie d'état (40) de l'un quelconque des autres modules esclaves (1), un terminateur de réseau (21) de celui-ci pour physiquement mettre fin au réseau (90) au niveau du module esclave (1) le plus éloigné.

15. Procédé selon l'une quelconque des revendications 12 à 14, comportant en outre
- la connexion électrique du connecteur de sortie d'état (40) d'un premier module esclave (1) des modules esclaves (1) à un connecteur d'entrée d'état (30) du module maître (50) ; et
- la détermination, par le module maître (50), de la fin de l'enregistrement itératif des modules esclaves (1) lors de la détection que la tension de déclenchement est appliquée au niveau du connecteur d'entrée d'état (30) du module maître (50).
